Europäisches Patentamt

European Patent Office

Office européen des brevets

(19)

(11) Publication number: **0 062 429**
A1

# EUROPEAN PATENT APPLICATION

(21) Application number: **82301415.4**

(22) Date of filing: **19.03.82**

(51) Int. Cl.³: **G 02 B 7/26**

(30) Priority: **04.04.81 GB 8110628**
**05.06.81 GB 8117271**

(43) Date of publication of application: **13.10.82**
**Bulletin 82/41**

(84) Designated Contracting States: **AT BE CH DE FR IT LI LU NL SE**

(71) Applicant: **PLESSEY OVERSEAS LIMITED, Vicarage Lane, Ilford Essex IGl 4AQ (GB)**

(72) Inventor: **Stewart, William James, Rans Cottage 21 East Street, Flitwell Oxfordshire (GB)**

(74) Representative: **Goodman, Christopher, The Plessey Company plc, Beeston Nottingham NG9 1LA (GB)**

(54) Improvements in or relating to optical devices.

(57) A coupler for an optical fibre system includes a retro-reflector (2) which because of its properties allows considerable relaxation in the positioning of the fibre (1, 1') in relation to the retroreflector (2). The principle may be used to provide switches or couplers.

- 1 -

## IMPROVEMENTS IN OR RELATING TO OPTICAL DEVICES.

The present invention relates to optical devices and more particularly to optical couplers, switches wavelength combiners etc. wherein light is modified in direction or form. In particular the invention is concerned with light transmitted along optical fibres.

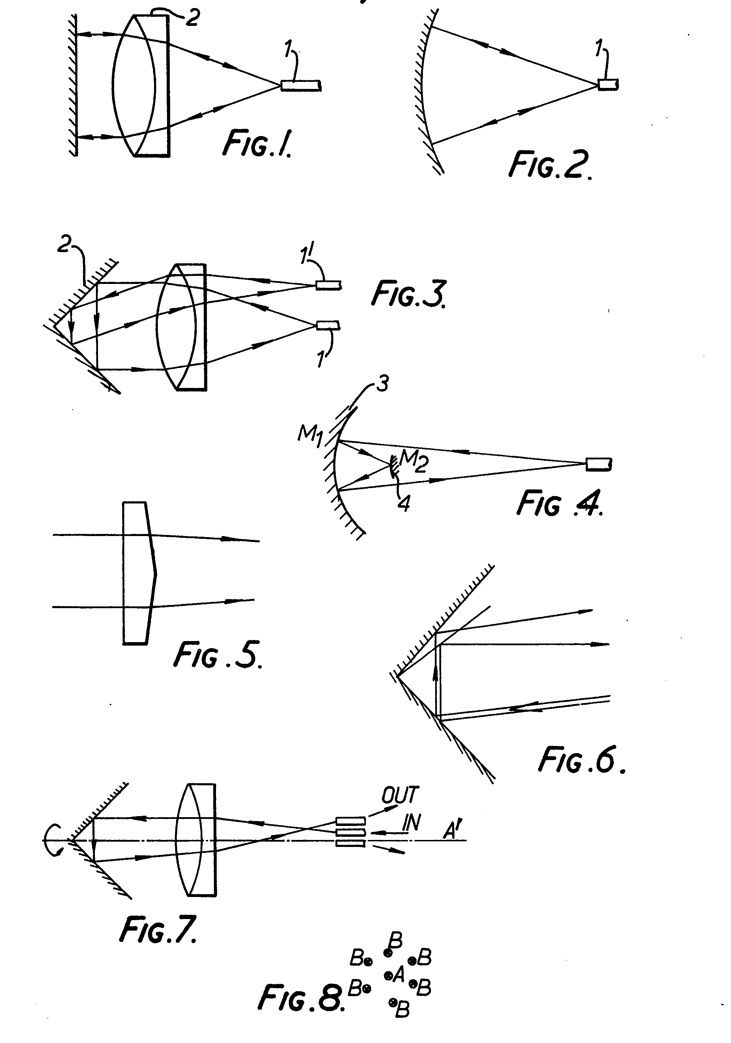

Many known optical fibre couplers, switches, wavelength combiners, etc. use expanded beam techniques. These techniques use a small lens or mirror to manipulate a beam of light much larger than the fibre to achieve this function, the light being ultimately re-imaged down onto the original, or another fibre (or of course a source or detector.) The basic device of this type, from which others are derived, may be regarded as being a device that reflects the light emerging from a fibre back into itself. Types of device using this principle are shown in the figures 1 and 2.

Although these expanded beam devices may allow the relaxing of tolerances in some respects compared to the equivalent "fibre-only" device the tolerancing on the crucial fibre transverse positioning is not improved.

However, according to the present invention, by replacing the mirror with a retroflector such as a corner cube a device can be made in which the image

- 2 -

will "track" the object as it is moved in any sideways direction.  Axial tolerances are not improved but these are less critical in any case.

According to the present invention there  is therefore provided an optical fibre connection device comprising a retroreflector, means for holding a first optical fibre in a first position in front of the retroreflector such that light emitted from said first optical fibre is received and reflected by the retroreflector along a defined path so as to be received at the plane of the first optical fibre at a defined second position with respect to said first position said device being such that within the working angle of said retroreflector the first position maybe varied whilst maintaining the relative distance between said first and second positions.

In a first preferred embodiment the retroreflector is formed by a corner cube prism and in a second preferred embodiment the retroreflector is formed by a concave mirror and convex mirror arrangement.

The present invention also provides an optical switching coupler comprising a retroreflector, means for holding a rotatable optical fibre combination in position in front of and within the working angle of

- 3 -

said retroreflector, said optical fibre combination comprising a first optical fibre capable of emitting light to be reflected by said retroreflector and one or more further optical fibres displaced a fixed distance apart from said first optical fibre in a fixed relationship, in which the retroreflector is modified by alteration of one or more reflection angles to displace the reflected beam by an amount equal to said fixed distance when said reflected beam reaches said optical fibre combination.

Preferably the first optical fibre is held in a central position and the further optical fibres are arranged symetrically and concentrically around first optical fibre. The retroreflector used may in a preferred embodiment be a corner cube prism with one face offset from $90^{\circ}$ with respect to its adjoining face by a small angle. The optical fibre combination is preferably rotatable around the central optical fibre.

In a further embodiment a dichroic mirror surface maybe positioned within the corner cube prism, its face being offset from $90^{\circ}$ such that light of the wavelength reflectable by the dichroic mirror is reflected back to a different position from other wavelengths of light. Thus a wavelength seperator

- 4 -

and or optical switching coupler maybe produced.

The optical fibres maybe held accurately in position by mounting them in V shaped grooves etched in silicon blocks or by other known accurate mounting means.

Optical lens means is preferably used between the optical fibre or optical fibre combination and the retroreflector to focus the light beam out of and into the optical fibres.

The present invention also provides an optical fibre connection device comprising means for holding the optical fibre or fibres in a fixed relationship with respect to the retroreflector, said means being detatchable for disconnection.

Embodiments of the present invention will now be described, by way of example with reference to the accompanying drawings in which:-

Figures 1 and 2 show known optical fibre connection devices.

Figure 3 shows a first optical connection device in accordance with the present invention employing a corner cube prism as retroreflector,

Figure 4 shows a second optical connection device in accordance with the present invention employing a concave and convex mirror retroreflector arrangement,

- 5 -

Figure 5 shows a Frisnel bi-prism arrangement which when used in conjunction with the arrangement of figure 3 or figure 4 will provide two tracking images,

Figure 6 shows a third optical connection device similar to figure 3 but including a dichroic mirror surface within the corner cube prism offset from one face of the prism,

Figure 7 shows a switching coupler using a corner cube retro prism with one "off-90$^{o}$" face,

Figure 8 shows the rotatable optical fibre combination device used to secure the optical fibres in position in the arrangement of figure 7, and

Figure 9 shows a connector emboding the corner cube retro prism as shown in figure 3.

Referring now to the drawings it maybe seen that in the arrangement of figure 1 or figure 2 the vertical or horizontal displacement of the end of the optical fibre 1 from its position will cause problems because the reflected beam will not return to that spot. Thus the positioning of the fibre is critical.

In the arrangement of figure 3 or 4 however the retroreflector used causes the reflected beam to track the fibre as it is moved to any position 1'.

Thus any beam emitted by the fibre will return to the same fibre providing that the corner cube prism 2 or concave and concave mirror arrangements 3,4 are accurate.

The corner cube prism 2 is shown for simplicity as an angle in two dimensions only but will of course comprise mirrors in three dimensions.

The mirrors shown in Figure 4 are concentric. In practice however M2 may be planer, with some loss of performance. Central obstruction will generally be minimal.

Other alternative forms of retroreflector may be used for example, a length of graded index rod with a plane mirror at the end.

Useful devices maybe made from these (any of Figures 1 - 4 in some cases) using extra components. For example the use of a Fresnel bi-prism, Figure 5, close to the mirror (M1) or lens will give two "tracking" images either side of the input fibre at spacings determined by the prism angle. If other fibres are placed at these points a splitter is obtained. The relative positions of these fibres may easily be accurately controlled using, for example, precision etched silicon V-grooves.

Variations of this using a dispersive prism or a diffraction grating to achieve wavelength separated images are obvious. A similar effect could be achieved in Figure 3 by using slightly tilted dichroic mirrors one behind the other as one face of the corner cube (Figure 6). A grating might also be used here and a split face, with different parts tilted differently, could replace the bi-prism.

A particularly simple way to produce a splitter is to use a corner cube with off-$90^{o}$ interfacial angles. This can be arranged to produce 2, 4 or 6 spots; according to the description below. The division of power is mode along diameters in the far field, and is thus made unselective.

The following is a description of the mode of operation of an 'imperfect' corner cube.

A corner cube maybe regarded as constructed of three mutually perpendicular roof prisms, each of which returns a ray deflected at an angle of $\pm 2 \delta\theta$ where $\delta\theta$ is the angle by which the roof angle differs from $90^{o}$, and the sign depends upon the direction in which the ray appears (viewed from the front) to cross the roof apex. In the complete cube all rays of interest are reflected from each face once and therefore cross the line of each roof apex ( a reflection of this in the opposite face is equally counted.) The negligible proportion of rays striking

- 8 -

the vertex of the cube is ignored. If the directions across each apex are labelled consistently (ie. in a similar way) it can easily be shown that the signs of the angular tilts always alternate. Rays may therefore cross the 3 roofs with any combination of signs except all +ve or all -ve. Since the individual roof angles may each be +ve or -ve (ie. $>$ or $< 90^{\circ}$), this does not restrict the combinations achieved, but merely restricts the number of arrangements of 3 signs achieved by any one cube to 6 of the possible 8.

The angular deflection of any one beam (of the six possible as above) is a sum of 3 vectors in angular space (ie. on a diagram of $\theta_x$ vs $\theta_y$ ) orientated at $120^{\circ}$ intervals and each of a magnitude related to the angle of one of the roofs according to:

$$\text{deflection} = 2\sqrt{2/3}\,\delta\theta$$

with the angle $\theta$ defined as before. The factor $\sqrt{2/3}$ arises because the roof prism is tilted away from the normal. The six possible spots are obtained by adding the 3 vectors with any combination of signs, except for two as indicated above. This gives the six output beam directions needed to make the 6-way splitter. If one of the roofs is exactly $90^{\circ}$ (max. interfacial angle) there will of course be only 4 spots, but two will be bright and two dim. If two faces are perfect right angles there will be just two output spots (equally bright.) All spots appear in diametrically opposite pairs, and it is, unfortunately, not possible to obtain 6 in a single row, the nearest being 4 in a row with two out of line.

To produce a connector as shown in Figure 7 a retro-prism with a slightly tilted face is used. This reflects the beam back to two defined points close to the original source and hence if a receiving fibres are mounted at those point in accurate fixed relationships to the emitting fibre the light will transfer.

A switching coupler as shown in Figure 8 may be produced by using the arrangement of Figure 7, the switching action being performed by rotation of the prism about the system axis $A-A^1$. By this means any two of several output fibres may be selected. The specific advantage of this form of switch lies again in terms of insensitivity to both angular and spatial movement of the retroprism or similar moving part (see figures 2, 3 etc.)

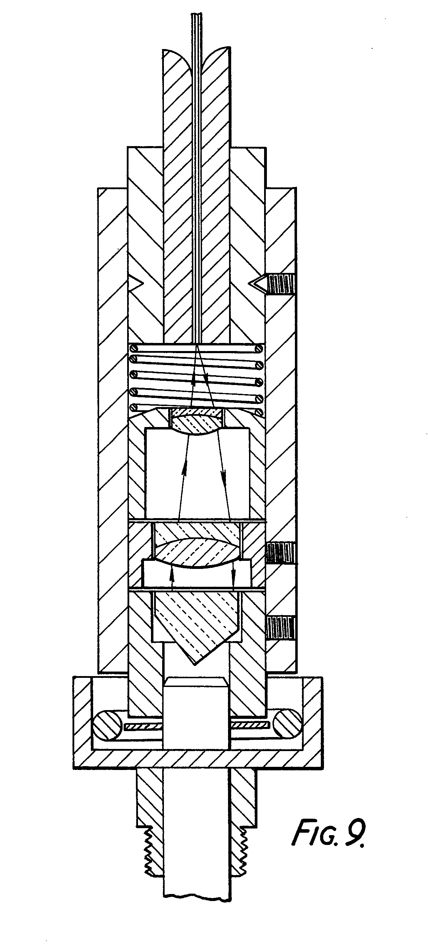

The key advantage of these techniques is the relaxing of fibre positioning tolerances and a switch coupler incorporating the corner cube prism arrangement is shown in figure 9. By using an imperfect

(oneface "off-90$^{\circ}$) corner cube prism of course an optical switch coupler can be constructed using the principles described above.

0062429

What we claim is:-

1.  An optical fibre connection device comprising a
    retroreflector, means for holding a first optical fibre
    in a first position in front of the retroreflector such
    that light emitted from said first optical fibre is
    received and reflected by the retroreflector along a
    defined path so as to be received at the plane of the
    first optical fibre at a defined second position with
    respect to said first position said device being such
    that within the working angle of said retroreflector
    the first position may be varied whilst maintaining
    the relative distance between said first and second
    positions.

2.  An optical fibre connection device as claimed in claim
    1 in which the retroreflector is formed by a corner cube
    prism.

3.  An optical fibre connection device as claimed in claim 1
    in which the retroreflector is formed by a concave
    mirror and convex mirror arrangement.

4.  An optical fibre connection device as claimed in claim 1
    comprising an optical switching coupler including
    said retroreflector, means for holding a rotatable
    optical fibre combination in position in front of and
    within the working angle of said retroreflector, said optical fibre combination comprising a first optical fibre capable of emitting light to be reflected by said retroreflector and one or more further optical fibres displaced a fixed distance apart from said first optical fibre in a fixed relationship, in which the retroreflector is modified by alteration of one or more reflection angles to displace the reflected beam by an amount equal to said fixed distance when said reflected beam reaches said optical fibre combination.

5. An optical fibre connection device as claimed in claim 4 . in which the first optical fibre is held in a central position and the further optical fibres are arranged symetrically and concentrically around first optical fibre.

6. An optical fibre connection device as claimed in claim 4 in which the retroreflector is a corner cube prism with one face offset from $90^{\circ}$, with respect to the adjoining face, by a small angle.

7. An optical fibre connection device as claimed in claim 4 in which the optical fibre combination is rotatable around the central optical fibre.

8. An optical fibre connection device as claimed in claim 2 in which a dichronic mirror surface is positioned within the corner cube prism, its face being offset from 90° such that light of the wavelength reflectable by the dichroic mirror is reflected back to a different position from other wavelengths of light, thus forming a wavelength separator and/or an optical switching coupler.

9.    An optical fibre connection device as claimed in claim 1 in which optical fibres are held accurately in position by mounting the fibres in grooves etched in silicon blocks.

10.   An optical fibre connection device as claimed in claim 1 in which optical lens means is mounted between the optical fibre or optical fibre combination and the retroreflector to focus the light beam out of and into the optical fibres.

11,   An optical fibre connection device as claimed in claim 1 including means for holding the optical fibres in a fixed relationship with respect to the retroreflector said means being detatchable for disconnection.

0062429

FIG.1.

FIG.2.

FIG.3.

FIG.4.

FIG.5.

FIG.6.

OUT

IN

A'

FIG.7.

FIG.8.

FIG. 9.

European Patent Office

**EUROPEAN SEARCH REPORT**

0062429
Application number

EP 82 30 1415.4

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| A | US - A - 4 208 094 (W.J. TOMLINSON et al.) <br> * abstract; fig. 1, 2 * <br> -- | 1 | G 02 B 7/26 |
| A | US - A - 4 239 330 (A. ASHKIN et al.) <br> * abstract; fig. 1, 2 * <br> -- | 1 | |
| A | GB - A - 1 500 257 (THOMSON-CSF) <br> * fig. 2 * <br> -- | 2 | TECHNICAL FIELDS SEARCHED (Int.Cl. 3) |
| A | US - A - 4 111 524 (W.J. TOMLINSON) <br> * summary * <br> -- | 8 | G 02 B 7/26 |
| A | FR - A1 - 2 441 860 (THOMSON-CSF) <br> * fig. 1 * <br> ---- | | |

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons
&: member of the same patent family, corresponding document

| X | The present search report has been drawn up for all claims | | |
|---|---|---|---|
| Place of search | | Date of completion of the search | Examiner |
| Berlin | | 10-06-1982 | FUCHS |

EPO Form 1503.1 06.78